# EUROPÄISCHE PATENTANMELDUNG

(11) **EP 1 944 537 A1**
(43) Veröffentlichungstag der Anmeldung: **16.07.2008**
(21) Anmeldenummer: 07100282.8
(22) Anmeldetag: 09.01.2007
(51) Int. Cl.: F16L 55/033, F16L 55/053

(54) **Schlauchleitung**

(71) Anmelder: Ford Global Technologies, LLC, Dearborn, MI 48126 (US)
(72) Erfinder: Figura, Michael Georg, 41542 Dormagen (DE); Kluge, Torsten, 51491 Overath (DE)
(74) Vertreter: Drömer, Hans-Carsten

(57) **Zusammenfassung**

Die Erfindung betrifft eine Schlauchleitung (1) bestehend aus einer ersten Schlauchleitung (2) zur Durchleitung eines ersten Fluids (4), wobei sich innerhalb der ersten Schlauchleitung (2) eine zweite Schlauchleitung (3) befindet und wobei diese zweite Schlauchleitung (3) mit einem zweiten Fluid (4) gefüllt ist. Die zweite Schlauchleitung (3) dämpft Druckpulsationen, die durch das erste Fluid (4) in die erste Schlauchleitung (2) eingetragen werden können.

## Beschreibung

Die Erfindung betrifft eine Schlauchleitung bestehend aus einer ersten Schlauchleitung zur Durchleitung eines ersten Fluids, wobei sich innerhalb der ersten Schlauchleitung eine zweite Schlauchleitung befindet und wobei diese zweite Schlauchleitung mit einem zweiten Fluid gefüllt ist.

Hydraulische Pumpen erzeugen oft keinen gleichmäßigen Fluidstrom. So erzeugen z. B. Flügelzellen oder Zahnradpumpen bedingt durch die Bauart keinen kontinuierlichen Fluidstrom. Dies trifft insbesondere auch auf Pumpen für hydraulische oder elektrohydraulische Servolenkungen (Servopumpen) für Kraftfahrzeuge zu. Servopumpen werden häufig von einer Brennkraftmaschine über ein Riemensystem angetrieben. Ungleichmäßiger Lauf dieser Brennkraftmaschine und/oder Schwingungen des Riemensystems führen zu einem ungleichmäßigen Lauf des Antriebs der Servopumpe. Somit werden noch zusätzliche Schwankungen des Fluidstromes zusätzlich zu den Bauartbedingten Schwanken erzeugt. Insgesamt entstehen hierdurch periodische und/oder auch zufällige Schwankungen im Fluidstrom, die sich in einer gewissen Welligkeit des Fluidstromes und/oder in Vibrationen und/oder Druckpulsationen bemerkbar machen. Die dadurch entstehenden Geräusche übertragen sich in den Innenraum und führen zu Unzufriedenheit bei den Fahrern und Passagieren dieser Kraftfahrzeuge. Auch bei elektrohydraulischen Servolenkungen kann es durch Ungleichmäßigkeiten im Lauf des Elektromotors, z. B. durch Spannungsschwankungen, zu den oben beschriebenen Problemen kommen.

Schläuche für Servolenkungen müssen hohe Drücke aushalten und sind daher sehr steif ausgeführt. Außerdem sind hohe Temperaturen im Motorraum und dauernde Vibrationen von den Schläuchen zu verkraften. Üblicherweise sind diese Schläuche daher mehrlagig ausgeführt, z. B. mit einer Außenschicht, einer Zwischenlage aus Metall- oder Kunststoffgewebe oder -geflecht und einer Innenschicht. So zeigt z. B. die US 7,063,181 einen Schlauch für Servolenkungen bestehend aus fünf Lagen.

Einer äußeren Lage, gefolgt von zwei Lagen Geflecht sowie zwei inneren Lagen. Dabei besteht die innerste Lage aus einem geräuschdämpfenden Material.

Die US 5,316,046 offenbart einen ebenfalls fünflagigen Schlauch für Servolenkungen, wobei hier eine Dämpfungslage aus Gummi zwischen zwei Gewebelagen eingebracht ist.

Einen anderen Ansatz zur Geräuschdämpfung offenbart die US 2,956,586. Offenbart wird eine Schlauchanordnung für Servolenkungen, bei der ein Förder- und Rücklaufschlauch als eine gemeinsame Einheit ausgebildet sind, in der Art, daß der Förderschlauch innerhalb des Rücklaufschlauches angeordnet ist. Zum einen ist diese Anordnung platzsparend, zum anderen werden Druckpulsationen im Förderschlauch durch den umgebenden Rücklaufschlauch mindestens teilweise ausgeglichen.

Der Erfindung liegt die Aufgabe zugrunde, eine Schlauchleitung, vorzugsweise für Servolenkungen von Kraftfahrzeugen, mit einfachen Mitteln dahingehend zu verbessern, daß Druckpulsationen und Geräusche verursacht durch pulsierend durchströmendes Fluid vermindert werden.

Erfindungsgemäß wird diese Aufgabe durch eine Schlauchleitung mit den Merkmalen des Anspruchs 1 gelöst.

Erfindungsgemäß ist innerhalb einer ersten Schlauchleitung eine zweite Schlauchleitung angeordnet wobei die zweite Schlauchleitung gegenüber der ersten Schlauchleitung fluiddicht ausgeführt ist. So kann z. B. die zweite Schlauchleitung fluiddicht verschweißt oder verklebt werden. Da die zweite Schlauchleitung im Gegensatz zur ersten Schlauchleitung keinem Systemdruck widerstehen muß, kann das Schlauchmaterial so optimiert werden, daß die zweite Schlauchleitung sehr flexibel auf die Druckpulsationen reagieren kann. Die zweite Schlauchleitung wird mit einem Fluid gefüllt. Dieses Fluid kann zusätzlich zur Dämpfung der Druckpulsationen dienen. Zum einen werden Druckspitzen aus der ersten Schlauchleitung aufgefangen und weitergeleitet, zum anderen kann ein Fluid mit guten Dämpfungseigenschaften verwendet werden.

Bevorzugt wird daher ein kompressibles Fluid verwendet. Dies kann eine kompressible Flüssigkeit oder ein Gel sein. Besonders bevorzugt wird jedoch ein Gas verwendet. Hier sind insbesondere inerte Gase und/oder Edelgase oder Gasmischungen geeignet.

Erfindungsgemäß ist es ausreichend, wenn die zweite Schlauchleitung sich nicht über die gesamte Länge der ersten Schlauchleitung erstreckt. Es kann sinnvoll sein, je nach Ausprägung/Frequenz der Druckpulsationen nur einen Teil der auftretenden Frequenzen zu dämpfen.

Vorteilhaft ist es auch, die zweite Schlauchleitung aus mehreren Segmenten herzustellen. Dabei können diese Segmente mit einander in Verbindung stehen, so daß die jeweiligen Fluidvolumina miteinander kommunizieren können. Es kann aber auch sinnvoll sein, die einzelnen Segmente voneinander fluiddicht zu trennen und diese einzelnen Segmente nur mechanisch miteinander zu verbinden.

Bei einer weiteren Ausführung der Erfindung wird die zweite Schlauchleitung innerhalb der ersten Schlauchleitung an mindestens einem Befestigungspunkt fixiert. Dabei kann z. B. die zweite Schlauchleitung an einem Ende mit der ersten Schlauchleitung so verpreßt (gecrimpt) werden, daß die Position der zweiten Schlauchleitung innerhalb der ersten Schlauchleitung fixiert ist. Alternativ ist z. B. auch eine Verklebung an einer Stelle oder eine Fixierung durch eine Feder denkbar.

Eine alternative oder zusätzliche bevorzugte Möglichkeit ist es, die zweite Schlauchleitung mittels eines Abstandshalters innerhalb der ersten Schlauchleitung zu fixieren. Dies kann an einer Stelle aber auch an mehreren Stellen innerhalb der ersten Schlauchleitung erfolgen, so daß z. b. die zweite Schlauchleitung mit der ersten Schlauchleitung nicht in Berührung kommt, um Relativbewegungen der ersten zur zweiten Schlauchleitung zu minimieren oder ganz zu verhindern.

Üblicherweise werden Schlauchleitungen für Servolenkungen mit Muffenstücken versehen, um die Schlauchleitungen mit Servopumpen oder Servolenkungen zu verbinden. Diese Muffenstücke sind allgemein bekannt und werden mit den Schlauchleitungen verpreßt. Erfindungsgemäß bevorzugt wird die zweite Schlauchleitung an mindesten einem Ende ebenfalls mit der ersten Schlauchleitung zusammen mit einem Muffenstück verpreßt (gecrimpt). Dadurch ist eine einfache und preiswerte Fixierung der zweiten Schlauchleitung sichergestellt.

In der einzigen Figur:

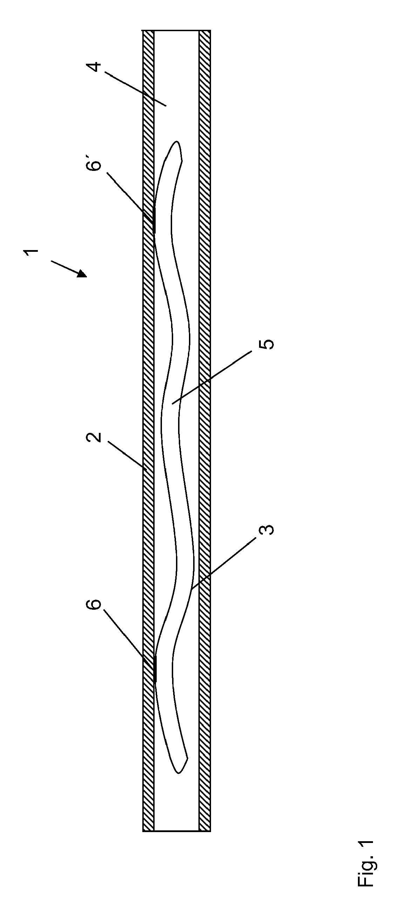

- Fig. 1: wird eine erfindungsgemäße Ausführungsform der Schlauchleitung als Prinzipskizze dargestellt.

Figur 1 zeigt einen Schnitt durch eine erfindungsgemäße Schlauchleitung 1. Die Schlauchleitung 1 besteht dabei aus einer ersten Schlauchleitung 2, z. B. einer konventionellen Schlauchleitung für ein Servolenkungssystem eines Kraftfahrzeugs. Durch diese erste Schlauchleitung 2 wird üblicherweise ein Fluid 4 z. B. ein Servoöl geleitet. Erfindungsgemäß ist nun in diese erste Schlauchleitung 2 eine zweite, vom Durchmesser her kleinere, Schlauchleitung 3 zumindest partiell eingezogen. Diese zweite Schlauchleitung 3 ist mit einem zweiten Fluid 5 gefüllt, wobei sich das zweite Fluid 5 vom ersten Fluid 4 unterscheidet. Wie bereits erwähnt, bietet sich hier ein inertes Gas an. Die zweite Schlauchleitung 3 ist bei der gezeigten Ausführungsform an zwei Befestigungspunkten 6, 6' mit der ersten Schlauchleitung 2 fixiert.

## Patentansprüche

1. Schlauchleitung (1), vorzugsweise für eine Servolenkung von Kraftfahrzeugen, bestehend aus einer ersten Schlauchleitung (2) zur Durchleitung eines ersten Fluids (4), wobei innerhalb der ersten Schlauchleitung (2) mindestens eine zweite Schlauchleitung (3) angeordnet ist und wobei die zweite Schlauchleitung (3) gegenüber der ersten Schlauchleitung (2) fluiddicht ausgeführt ist,
**dadurch gekennzeichnet, daß**
diese mindestens zweite Schlauchleitung (3) mit einem zweiten Fluid (5) gefüllt ist.

2. Schlauchleitung (1) nach Anspruch 1,
**dadurch gekennzeichnet, daß**
das zweite Fluid (5) kompressibel ist.

3. Schlauchleitung (1) nach Anspruch 1,
**dadurch gekennzeichnet, daß**
das zweite Fluid (5) ein Gas ist.

4. Schlauchleitung (1) nach Anspruch 2,
**dadurch gekennzeichnet, daß**
das Gas ein Edelgas und/oder ein innertes Gas und/oder eine Gasmischung ist.

5. Schlauchleitung (1) nach einem der vorhergehenden Ansprüche,
**dadurch gekennzeichnet, daß**
die mindestens zweite Schlauchleitung (3) sich nicht über die gesamte Länge der ersten Schlauchleitung (2) erstreckt.

6. Schlauchleitung (1) nach einem der vorhergehenden Ansprüche,
**dadurch gekennzeichnet, daß**
die mindestens zweite Schlauchleitung (3) aus mehreren Segmenten besteht.

7. Schlauchleitung (1) nach einem der vorhergehenden Ansprüche,
**dadurch gekennzeichnet, daß**
die mindestens zweite Schlauchleitung (3) mit mindestens einem Befestigungspunkt (6, 6') innerhalb der ersten Schlauchleitung fixiert ist.

8. Schlauchleitung (1) nach einem der vorhergehenden Ansprüche,
**dadurch gekennzeichnet, daß**
die mindestens zweite Schlauchleitung (3) mit mindestens einem Abstandshalter innerhalb der ersten Schlauchleitung fixiert ist.

9. Schlauchleitung (1) nach einem der vorhergehenden Ansprüche,
**dadurch gekennzeichnet, daß**
die mindestens zweite Schlauchleitung (3) zusammen mit der ersten Schlauchleitung (2) an mindestens einem Ende auf ein Muffenstück gecrimpt ist.
